# EUROPEAN PATENT APPLICATION

(11) **EP 2 806 419 A1**
(43) Date of publication of application: **26.11.2014**
(21) Application number: 12866195.6
(22) Date of filing: 02.10.2012
(51) Int. Cl.: G09F 9/00, H04M 1/02

(54) **MOBILE TERMINAL DEVICE**

(30) Priority: 16.01.2012 JP 2012006587; 05.06.2012 JP 2012128093
(71) Applicant: NEC CASIO Mobile Communications, Ltd., Kawasaki-shi Kanagawa 211-8666 (JP)
(72) Inventor: Shiraishi, Mitsutaka, Kawasaki-shi Kanagawa 211-8666 (JP)
(74) Representative: Vossius & Partner
(86) International application number: PCT/JP2012/006317
(87) International publication number: WO 2013/108312

(57) **Abstract**

A housing 10 provided in a portable terminal device according to the present invention includes a plurality of stacked carbon fiber layers 21 to 24. Further, the direction of carbon fibers of the carbon fiber layer 21 disposed on the outermost side of the housing 10 among the plurality of carbon fiber layers 21 to 24 is conformed to the longitudinal direction d1 of the housing. The carbon composite material has such properties that the thermal conductivity is high and the strength is large along the direction of the carbon fibers. Therefore, with this configuration, heat can be preferentially diffused in the longitudinal direction d1 of the housing 10 and the strength in the longitudinal direction of the housing 10 can be improved.

## Description

### Technical Field

The present invention relates to a portable terminal device, and in particular, a portable terminal device using a thin planar housing.

### Background Art

In recent years, portable terminal devices such as mobile phones and smart phones have become widespread. In general, portable terminal devices are often carried around for use by users. When a user accidentally drops a portable terminal device, for example, a strong impact is exerted on the portable terminal device.

Patent literature 1 discloses a technique for an electronic apparatus that is reduced in thickness by contriving the arrangement of components contained in the electronic apparatus. Further, Patent literature 2 discloses a technique for improving the strength and the rigidity of the housing of a portable terminal device.

### Citation List

### Patent Literature

Patent literature 1: Japanese Unexamined Patent Application Publication No. 2010-140510
Patent literature 2: Japanese Unexamined Patent Application Publication No. 2011-55107

### Summary of Invention

### Technical Problem

In recent years, portable terminal devices such as mobile phones and smart phones have been becoming thinner and thinner. However, there is a problem that as portable terminal devices become thinner, the strength of the portable terminal devices is lowered and hence the impact resistance is lowered. Further, as portable terminal devices become thinner, the space in which each component is housed becomes smaller and the heat generated in each component tends to be transferred to the housing. As a result, for example, there is a problem that a user tends to feel the heat when he/she holds the portable terminal device in his/her hand. Therefore, it is necessary to develop a mechanism for dissipating the heat generated from components and the like housed in the housing more efficiently.

In view of the above-described problems, an object of the present invention is to provide a portable terminal device capable of achieving a reduction in the thickness, and improvements in the impact resistance and in the heat dissipating efficiency of the portable terminal device.

### Solution to Problem

A portable terminal device according to the present invention includes a housing, in which the housing includes a plurality of stacked carbon fiber layers, and a direction of carbon fibers of a first carbon fiber layer disposed on an outermost side of the housing among the plurality of carbon fiber layers coincides with a longitudinal direction of the housing.

### Advantageous Effects of Invention

According to the present invention, it is possible to provide a portable terminal device capable of achieving a reduction in the thickness, and improvement in the impact resistance and in the heat dissipating efficiency of the portable terminal device.

### Brief Description of Drawings

Fig.1A is a top view showing a portable terminal device according to a first exemplary embodiment;
Fig. 1B is a cross section of the portable terminal device shown in Fig. 1A taken along a line IB-IB in Fig. 1A;
Fig.1C is a top view of a housing of the portable terminal device according to the first exemplary embodiment;
Fig. 2 is a perspective view of the portable terminal device according to the first exemplary embodiment as viewed from a housing side;
Fig. 3 is an exploded perspective view showing an example of a housing provided in the portable terminal device according to the first exemplary embodiment;
Fig. 4 is a perspective view of the portable terminal device according to the first exemplary embodiment as viewed from a housing side;
Fig. 5 is a perspective view of the portable terminal device according to the first exemplary embodiment as viewed from a housing side;
Fig. 6 is a cross section of the portable terminal device shown in Fig. 5 taken along a line VI-VI in Fig. 5;
Fig. 7 is a cross section of the portable terminal device shown in Fig. 5 taken along a line VI-VI in Fig. 5;
Fig. 8 is a perspective view of the portable terminal device according to the first exemplary embodiment as viewed from a housing side;
Fig. 9 is an exploded perspective view showing an example of a housing provided in a portable terminal device according to a second exemplary embodiment;
Fig. 10 is a cross section showing an example of a housing provided in the portable terminal device according to the second exemplary embodiment; and
Fig. 11 is a cross section showing another example of a housing provided in the portable terminal device according to the second exemplary embodiment.

### Description of Embodiments

### <First exemplary embodiment>

Exemplary embodiments according to the present invention are explained hereinafter with reference to the drawings.

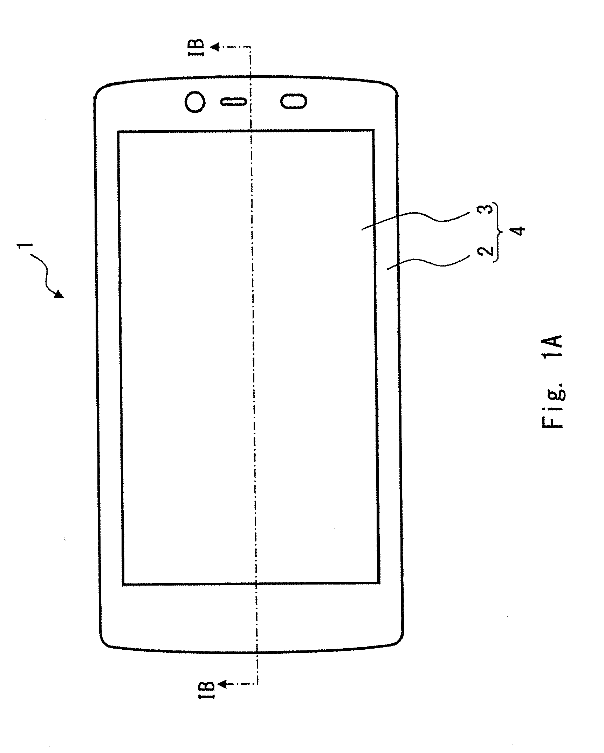

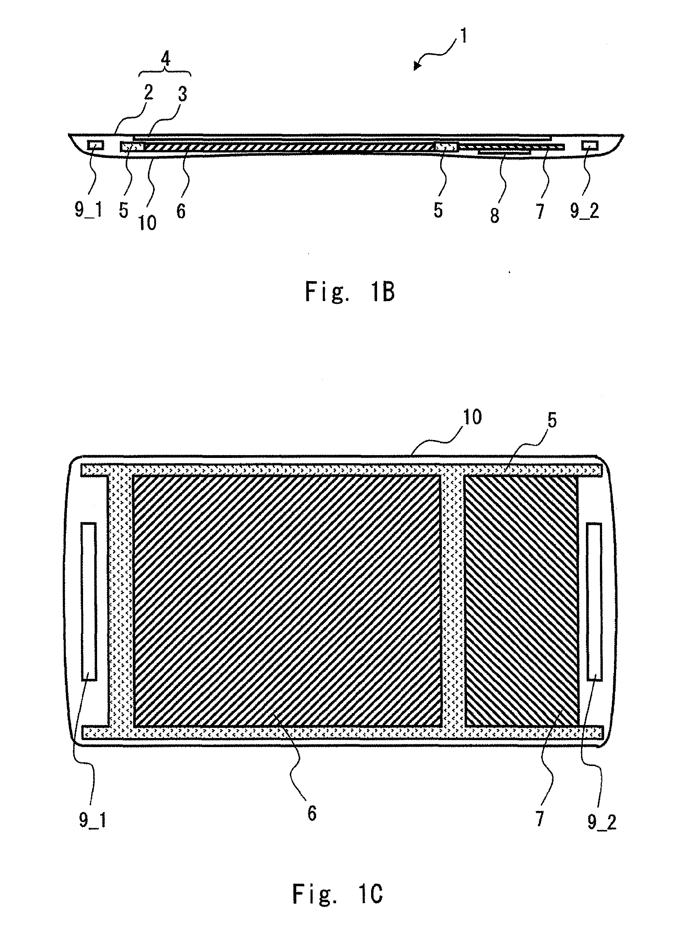

Figs.1A to 1C show a portable terminal device according to a first exemplary embodiment. Fig.1A is a top view showing the portable terminal device according to this exemplary embodiment. Fig. 1B is a cross section of the portable terminal device shown in Fig. 1A taken along a line IB-IB in Fig. 1A. Fig.1C is a top view of a housing of the portable terminal device according to this exemplary embodiment (i.e., a figure in which a display section is omitted).

In the potable terminal device 1 according to this exemplary embodiment, a frame component 5, a battery 6, a substrate 7, and antennas 9_1 and 9_2 are housed in a space that is formed by joining a display section 4 with a housing 10. The portable terminal device 1 according to this exemplary embodiment may be, for example, a smart phone, a tablet-type portable terminal device, a mobile phone, a game machine, an electronic book reader, or the like.

As shown in Figs. 1A and 1B, the display section 4 includes a panel 2 and a display panel 3. The panel 2 is a component for protecting the display panel 3 from an external environment. The panel 2 may be a touch panel. The display panel 3 is attached to the panel 2 by using an adhesive, a double-sided adhesive tape, or the like. The display panel 3 is, for example, a liquid crystal panel, an organic EL (Electro Luminescence) panel, or the like.

Further, as shown in Figs. 1B and 1C, the battery 6 and the substrate 7 are fixed to the frame component 5 from the housing 10 side. The frame component 5, to which the battery 6 and the substrate 7 are fixed, is fixed to the housing 10 by using screws or the like. The battery 6 is, for example, a lithium-ion secondary battery. Further, a circuit component 8 is provided on the substrate 7. For example, the circuit component 8 is disposed on the surface of the substrate 7 on which the housing 10 is disposed. Examples of the circuit component 8 include an integrated circuit device such as a processor, a memory, and a communication module, and an image pickup device for a camera.

Since the frame component 5 is a component for holding the battery 6 and the substrate 7, the frame component 5 needs to have a certain strength. Therefore, the frame component 5 is preferably formed by using metal material. Examples of the material for the frame component 5 include magnesium alloys, aluminum, aluminum alloys, and stainless steel. Note that to reduce the weight of the portable terminal device 1, the frame component 5 is preferably formed by using a magnesium alloy. Alternatively, the frame component 5 may be formed by using resin material, provided that the certain strength is ensured.

Further, the antennas 9_1 and 9_2 are disposed in the ends in the longitudinal direction of the housing 10. Although the two antennas 9_1 and 9_2 are disposed in both ends in the longitudinal direction of the housing 10 in the example shown in Figs. 1B and 1C, only one antenna may be provided in other examples. Further, the antenna(s) may be disposed in a place(s) other than the longitudinal ends of the housing 10.

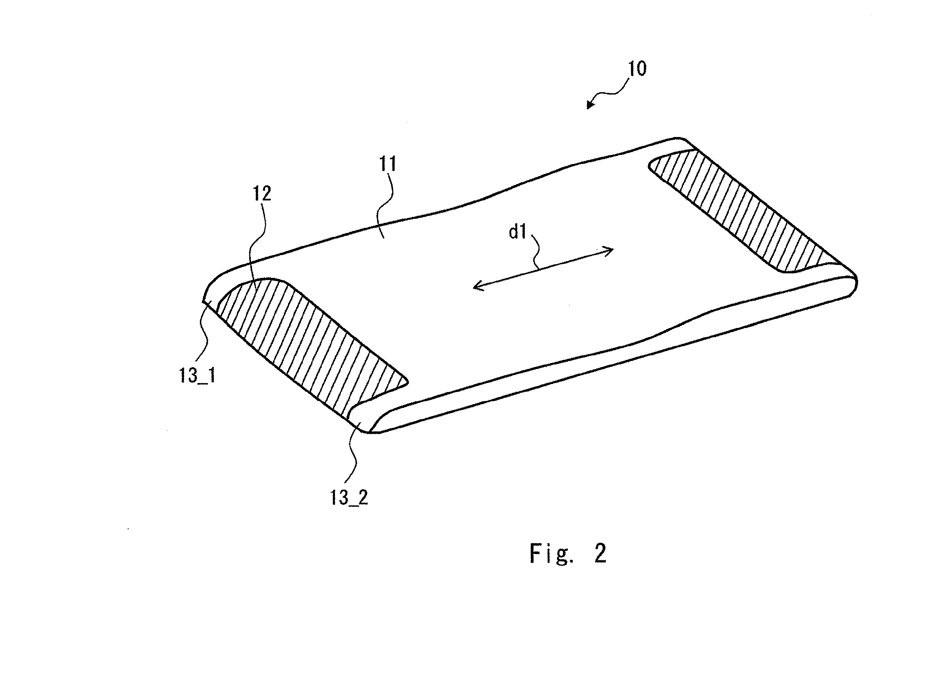

Fig. 2 is a perspective view of the portable terminal device according to this exemplary embodiment as viewed from the housing 10 side. The housing 10 of the portable terminal device according to this exemplary embodiment is formed of material containing carbon composite material (CFRP: Carbon Fibers Reinforced Plastics). The carbon composite material is a composite material containing a large amount of carbon (for example, 50% (v/v) or greater), and containing an inorganic binder such as silica and alumina, fibers, and so on. For example, carbon fibers can be used as a reinforcement material of carbon composite material and a resin such as an epoxy resin can be used as a base material thereof. The carbon composite material has both a high strength and a light weight. Further, the carbon composite material has such a property that its thermal conductivity is higher than that of resin material (plastic material).

As shown in Fig. 2, the housing 10 includes a first area 11 formed by using a carbon composite material and a second areas 12 formed by using a resin material. Since the carbon composite material contains a conductive material, it has a radio wave shielding property. Therefore, it is preferable that an insulating material (a material that lets radio waves pass through it) such as a resin material be used instead of the carbon composite material in a place(s) corresponding to a place(s) of the housing 10 where an antenna(s) is disposed. In the example shown in Fig. 1C, the antennas 9_1 and 9_2 are disposed in the longitudinal ends of the housing 10. Therefore, in this case, second areas 12 formed by using a resin material are disposed in the longitudinal ends of the housing 10 as shown in Fig. 2. For example, a second area 12 can be disposed in an area between a protrusion 13_1 and a protrusion 13_2 formed in a longitudinal end of the first area 11. Note that it is possible to improve the resistance to impacts exerted on the corners of the housing by forming the protrusions 13_1 and 13_2 by using a carbon composite material.

Further, a part(s) of the housing 10 having a curvature, such as a peripheral part, may be formed by using a resin material. By forming the part(s) having a curvature by using the resin material as described above, the manufacturing of the housing 10 becomes easier. The housing 10 made of the carbon composite material and resin material can be formed by, for example, placing the carbon composite material in a predetermined part(s) of a die for the housing 10 and then performing injection molding. Further, the rear surface of the housing 10 shown in Fig. 2 is formed so as to have a curved line(s) so that the portable terminal device fits a user's hand. Alternatively, the rear surface of the housing 10 may be formed as a flat surface.

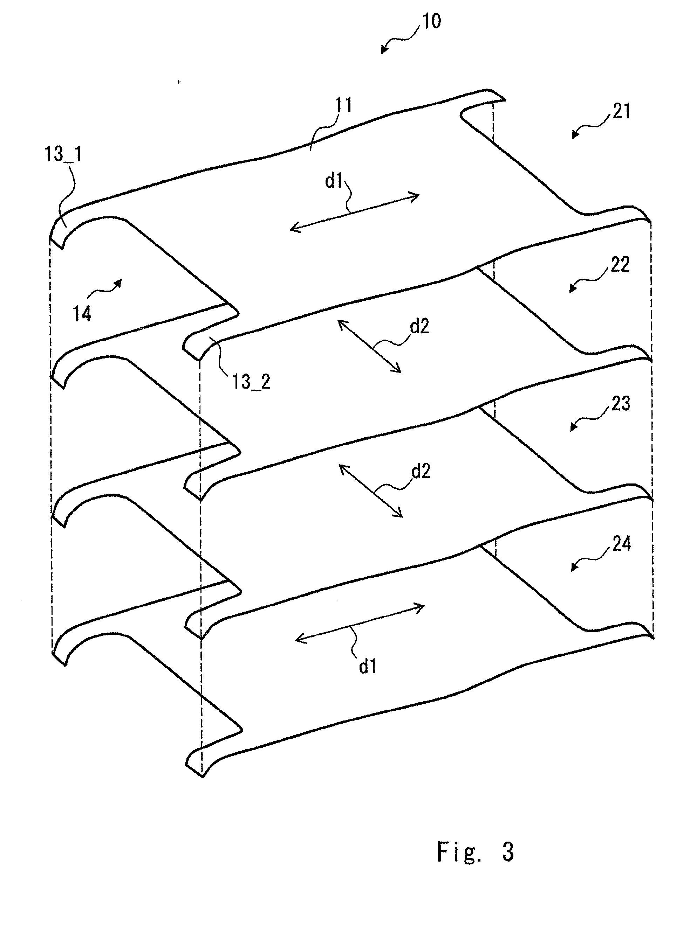

Fig. 3 is an exploded perspective view showing an example of the housing 10 provided in the portable terminal device according to this exemplary embodiment. As shown in Fig. 3, the housing 10 can be formed by stacking a plurality of carbon fiber layers 21 to 24 in the direction perpendicular to the main surface of the housing 10 (i.e., the direction perpendicular to the main surface of the display section 4). Protrusions 13_1 and 13_2 and cut-out parts 14 are formed in each of the carbon fiber layers 21 to 24. The cut-out parts 14 correspond to parts where the second areas 12 formed of resin material are disposed.

In the example shown in Fig. 3, the direction of the carbon fibers of the carbon fiber layer 21 (first carbon fiber layer) disposed on the outermost side of the housing 10 (in the place furthest from the display section 4) among the plurality of carbon fiber layers 21 to 24 is conformed to the longitudinal direction d1 of the housing. The carbon composite material has such properties that the thermal conductivity is high and the strength is large along the direction of the carbon fibers. Therefore, it is possible to preferentially diffuse the heat generated from components (circuit components and the like) housed in the housing 10 in the longitudinal direction d1 of the housing 10 by orienting the carbon fibers of the carbon fiber layer 21, which is disposed on the outermost side of the housing 10, in the longitudinal direction d1 of the housing 10.

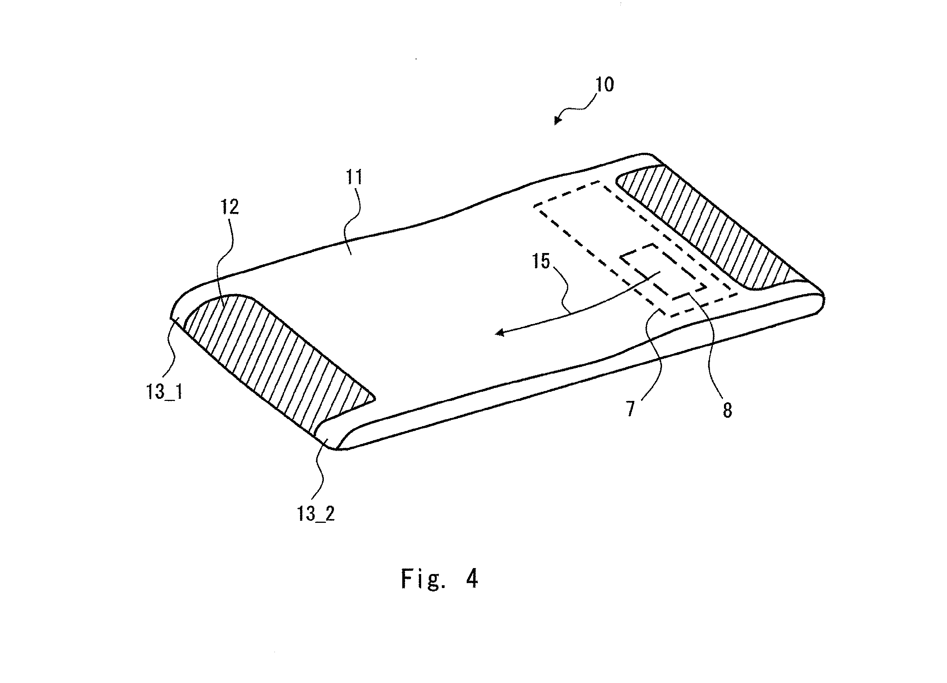

That is, as shown in Fig. 4, it is possible to improve the heat dissipating effect by conforming a diffusing direction 15 of the heat generated from the circuit component 8 provided on the substrate 7 housed in the housing 10 to the longitudinal direction of the housing 10 along which the area of the rear surface is large. As a result, it is possible to make a user less likely to feel the heat originating from the inside of the portable terminal device when the user holds the potable terminal device with his/her hand.

Further, when the portable terminal device is dropped, a large impact is exerted in the longitudinal direction of the potable terminal device. By orienting the carbon fibers of the carbon fiber layer 21 in the longitudinal direction of the housing 10, the strength in the longitudinal direction of the housing 10 can be improved, thus improving the resistance to impacts that would be exerted when the portable terminal device is dropped.

Further, as shown in Fig. 3, the direction of the carbon fibers of the carbon fiber layer 24 (second carbon fiber layer) disposed on the innermost side of the housing 10 among the plurality of carbon fiber layers 21 to 24 may be conformed to the longitudinal direction d1 of the housing 10. When carbon fiber layers are stacked, the thermal conductivity of the carbon fibers in the direction of the fibers is about 20 times to 30 times that in the stacking direction of the carbon fiber layers. Therefore, by conforming the direction of the carbon fibers of the carbon fiber layer 24 disposed on the innermost side of the housing 10 to the longitudinal direction d1 of the housing 10, it is possible to preferentially diffuse the heat generated from components housed in the housing 10 in the longitudinal direction d1 of the housing 10 before this generated heat diffuses to the outside of the housing 10 (i.e., to the carbon fiber layer 21 located on the outer side).

Further, as shown in Fig. 3, the direction of the carbon fiber layers 22 and 23 disposed between the carbon fiber layers 21 and 24 among the plurality of carbon fiber layers 21 to 24 may be conformed to a direction d2 intersecting the longitudinal direction of the housing 10. By conforming the direction of the carbon fiber layers 22 and 23 to the direction d2 intersecting the longitudinal direction of the housing 10 as described above, it is possible to increase the strength in the direction d2 intersecting the longitudinal direction of the housing 10 while maintaining the strength in the longitudinal direction d1 of the housing 10 and the heat dissipating effect of the housing 10. Note that, for example, the direction d2 intersecting the longitudinal direction of the housing 10 is a direction perpendicular to the longitudinal direction d1 of the housing 10.

Note that although the housing 10 includes four carbon fiber layers in the example shown in Fig. 3, the number of the carbon fiber layers can be arbitrarily determined. Further, the direction of the carbon fibers of each of the carbon fiber layers other than the carbon fiber layer 21, which is disposed on the outermost side of the housing 10, can also be arbitrarily determined. For example, in consideration of the strength in the longitudinal direction d1 of the housing 10 and the heat dissipating effect of the housing 10, the amount of carbon fibers oriented in the longitudinal direction d1 of the housing 10 is made larger than that of carbon fibers oriented in the direction d2 intersecting the longitudinal direction of the housing 10.

Note that the above explanation is made on the assumption that the direction of carbon fibers of the carbon fiber layers 21 and 24 coincides with the longitudinal direction d1 of the housing 10. However, the only requirement for the direction of carbon fibers is that the direction of carbon fibers of the carbon fiber layers 21 and 24 should generally coincide with the longitudinal direction d1 of the housing 10. That is, each of the carbon fiber layers 21 and 24 may include carbon fibers that are oriented in directions other than the longitudinal direction d1 of the housing 10. Similarly, the above explanation is made on the assumption that the direction of carbon fibers of the carbon fiber layers 22 and 23 coincides with the direction d2 intersecting the longitudinal direction of the housing 10. However, the only requirement for the direction of carbon fibers is that the direction of carbon fibers of the carbon fiber layers 22 and 23 should generally coincide with the direction d2. That is, each of the carbon fiber layers 22 and 23 may include carbon fibers that are oriented in directions other than the direction d2.

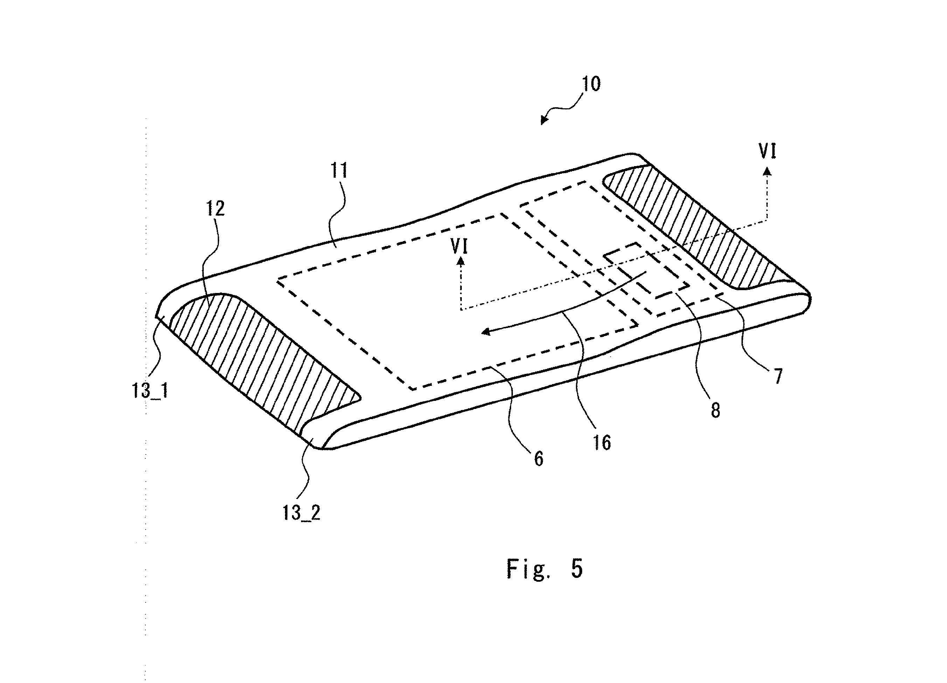

Further, as shown in Fig. 5, the substrate 7 and the battery 6 are housed in the housing 10. Note that the circuit component 8 (first component) provided on the substrate 7 generates a large amount of heat while the battery 6 (second component) has a large heat capacity. Therefore, by arranging the circuit component 8 and the battery 6 in the longitudinal direction of the housing 10, it is possible to transfer the heat generated in the circuit component 8 to the battery 6 having a large heat capacity through the carbon fibers of the housing 10 and thereby to efficiently dissipate the heat generated in the circuit component 8. That is, it is possible to diffuse the heat generated in the circuit component 8 in a diffusing direction 16 by using the housing 10 and thereby to make the battery 6 having a large heat capacity absorb the heat.

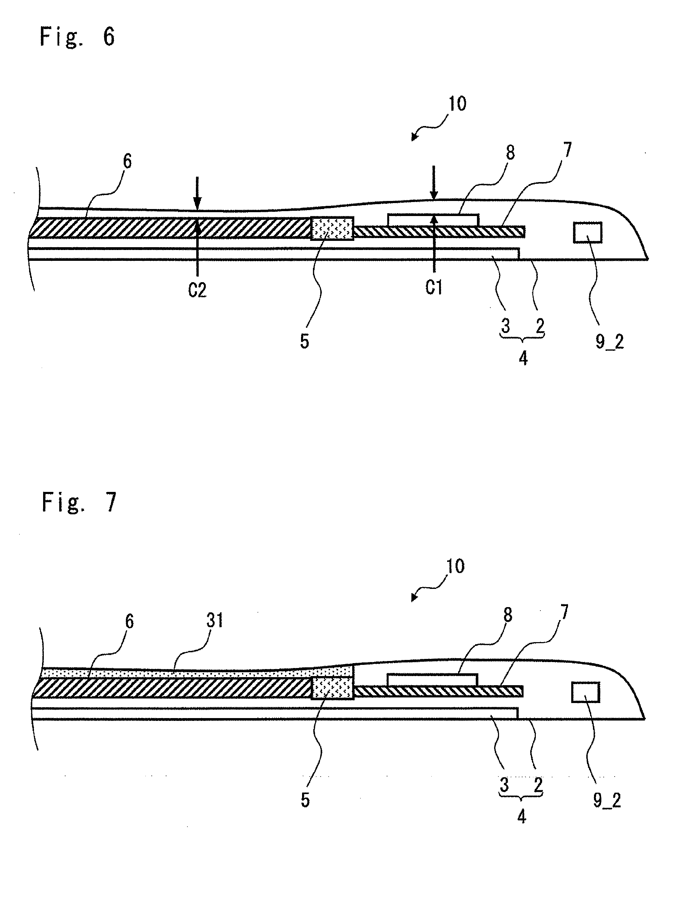

Fig. 6 is a cross section of the portable terminal device shown in Fig. 5 taken along a line VI-VI in Fig. 5. As shown in Fig. 6, the distance C2 between the inner surface of the housing 10 and the battery 6 (second component) may be made smaller than the distance C1 between the inner surface of the housing 10 and the circuit component 8 (first component). By reducing the distance C2 between the inner surface of the housing 10 and the battery 6 as described above, the heat transfer from the housing 10 to the battery 6 can be facilitated. Further, by increasing the distance C1 between the inner surface of the housing 10 and the circuit component 8, the heat transfer from the circuit component 8 to the housing 10 can be suppressed. That is, the air layer around the circuit component 8 works as an insulating material. By facilitating the heat transfer from the housing 10 to the battery 6 and suppressing the heat transfer from the circuit component 8 to the housing 10 as described above, it is possible to suppress the heat generation by the housing 10 itself. As a result, it is possible to make it less likely that a user would feel the heat originating from the inside of the portable terminal device when the user holds the portable terminal device in his/her hand.

For example, when the housing 10 of the portable terminal device is formed in such a shape that the housing 10 has a curved line in the longitudinal direction of the housing 10, a thicker section(s) and a thinner section(s) are formed, In this case, by disposing the circuit component 8 in the thicker section and disposing the battery 6 in the thinner section, it is possible to efficiently transfer the heat generated in the circuit component 8 to the battery 6 having a large heat capacity.

Further, as shown in Fig. 7, for example, a heat conduction component 31 (third component) for transferring heat from the housing 10 to the battery 6 may be provided between the inner surface of the housing 10 and the battery 6 (second component). For example, a material having a high thermal conductivity such as a metal material (e.g., aluminum, an aluminum alloy, copper, and so on) can be used as the heat conduction component 31. By disposing the heat conduction component 31 between the inner surface of the housing 10 and the battery 6, the heat transfer from the housing 10 to the battery 6 can be further facilitated.

Further, this exemplary embodiment may be configured so that the heat is transferred to a component(s) having a large heat capacity such as the frame component 5 and the antennas 9_1 and 9_2. For example, when the heat is to be transferred to the frame component 5, the heat conduction component 31 for transferring heat from the housing 10 to the frame component 5 may be provided between the inner surface of the housing 10 and the inner surface of the frame component 5 on the side on which the housing 10 is disposed, as shown in Fig. 7.

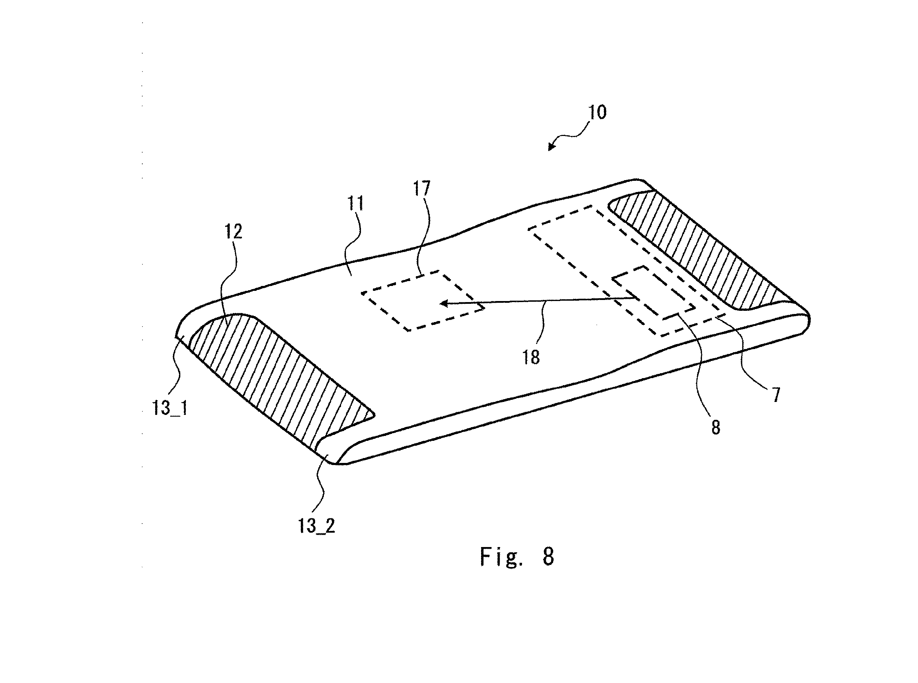

Further, as shown in Fig. 8, a component 17 having a large heat capacity may be newly provided inside the housing 10. For example, a metal material (e.g., aluminum, an aluminum alloy, copper, and so on) can be used as the component 17 having a large heat capacity. By disposing the component 17 having a large heat capacity inside the housing 10 as described above, it is possible to transfer the heat generated in the circuit component 8 to the component 17 having a large heat capacity through the housing 10. For example, when the direction 18 from the circuit component 8 toward the component 17 having a large heat capacity has a certain angle with respect to the longitudinal direction of the housing 10, the direction of the carbon fibers of the carbon fiber layer 24, which is disposed on the innermost side of the housing 10 among the plurality of carbon fiber layers 21 to 24 of the housing 10 (see Fig. 3), may be conformed to the direction 18 from the circuit component 8 toward the component 17 having a large heat capacity. By conforming the direction of the carbon fibers of the carbon fiber layer 24 to the direction 18 from the circuit component 8 toward the component 17 having a large heat capacity as described above, the heat can be efficiently transferred from the circuit component 8 to the component 17 having a large heat capacity.

Among the plurality of carbon fiber layers 21 to 24, the carbon fiber layer 21, which is disposed on the outermost side of the housing 10, has the largest effect on the strength of the housing 10. Meanwhile, among the plurality of carbon fiber layers 21 to 24, the carbon fiber layer 24, which is disposed on the innermost side of the housing 10, has the largest effect on the transfer of the heat generated in the circuit component 8. Therefore, by orienting the carbon fibers of the carbon fiber layer 21 in the longitudinal direction of the housing 10 and orienting the carbon fibers of the carbon fiber layer 24 in the direction 18 from the circuit component 8 toward the component 17 having a large heat capacity, it is possible to efficiently transfer the heat from the circuit component 8 to the component 17 having a large heat capacity while maintain the strength of the housing 10.

In recent years, portable terminal devices such as mobile phones and smart phones have been becoming thinner and thinner. However, there has been a problem that as portable terminal devices become thinner, the strength of the portable terminal devices is lowered and hence their impact resistance is lowered. Further, as portable terminal devices become thinner, the space in which each component is housed becomes smaller and the heat generated in each component tends to be transferred to the housing. As a result, for example, there has been a problem that a user tends to feel the heat when he/she holds the portable terminal device in his/her hand. Therefore, it has been necessary to develop a mechanism for dissipating the heat generated from components and the like housed in the housing more efficiently.

Therefore, in the portable terminal device according to this exemplary embodiment, the direction of the carbon fibers of the carbon fiber layer 21, which is disposed on the outermost side of the housing 10 among the plurality of carbon fiber layers 21 to 24 stacked in the direction perpendicular to the main surface of the housing 10, is conformed to the longitudinal direction d1 of the housing 10. Note that the carbon composite material has such properties that the thermal conductivity is high and the strength is large along the direction of the carbon fibers. Therefore, it is possible to diffuse the heat generated in components housed in the housing 10 in the longitudinal direction d1 of the housing 10, along which the area of the rear surface is large, by orienting the carbon fibers of the carbon fiber layer 21, which is disposed on the outermost side of the housing 10, in the longitudinal direction d1 of the housing 10. As a result, it is possible to make it less likely that a user would feel the heat originating from the inside of the portable terminal device when the user holds the portable terminal device in his/her hand.

Further, when the portable terminal device is dropped, a large impact is exerted in the longitudinal direction of the portable terminal device. By orienting the carbon fibers of the carbon fiber layer 21 of the housing 10 in the longitudinal direction d1 of the housing 10, the strength in the longitudinal direction d1 of the housing 10 can be improved, thus improving the resistance to impacts that would be exerted when the portable terminal device is dropped. In particular, the carbon fiber layer 21, which is disposed on the outermost side of the housing 10, has the largest effect on the strength of the housing 10. Therefore, by orienting the carbon fibers of the carbon fiber layer 21, which is disposed on the outermost side of the housing 10, in the longitudinal direction d1, the strength in the longitudinal direction d1 of the housing 10 can be improved.

According to the invention in accordance with this exemplary embodiment explained above, it is possible to provide a portable terminal device capable of achieving a reduction in the thickness and improvements in the impact resistance and in the heat dissipating efficiency of the portable terminal device.

### <Second exemplary embodiment>

Next, a second exemplary embodiment according to the present invention is explained. A portable terminal device according to this exemplary embodiment is different from the portable terminal device according to the first exemplary embodiment in that a reinforcement component(s) is provided among a plurality of carbon fiber layers in the portable terminal device according to this exemplary embodiment. The portable terminal device according to this exemplary embodiment is similar to the portable terminal device according to the first exemplary embodiment except for this point. Therefore, the same symbols are assigned to the same components/structures and their duplicated explanations are omitted.

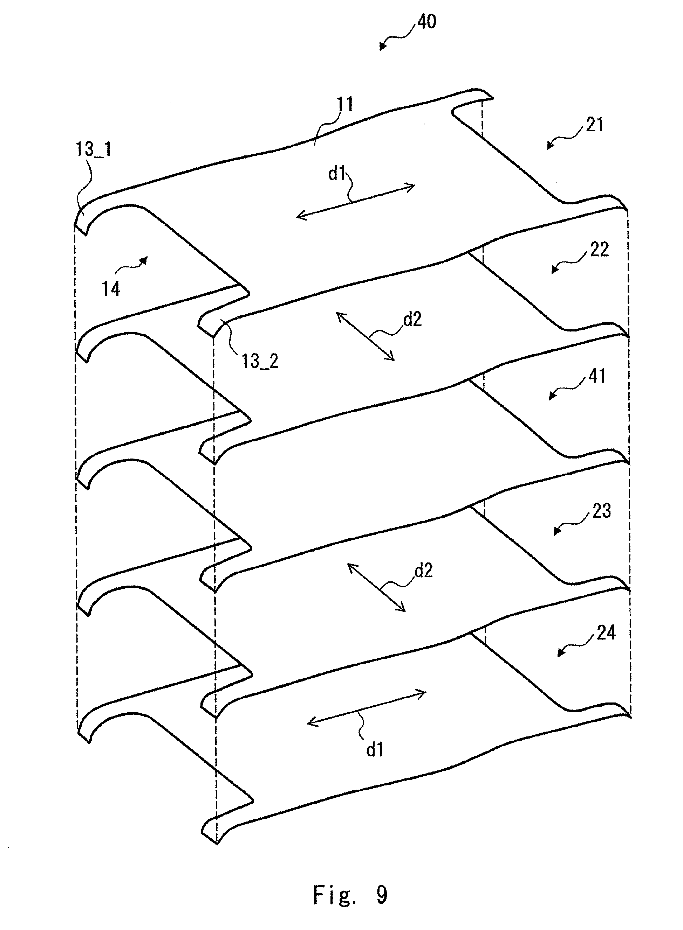

Fig. 9 is an exploded perspective view showing an example of a housing 40 provided in a portable terminal device according to this exemplary embodiment. As shown in Fig. 9, the housing 40 can be formed by stacking a plurality of carbon fiber layers 21 to 24 and a reinforcement component 41 in the direction perpendicular to the main surface of the housing 40. Protrusions 13_1 and 13_2 and cut-out parts 14 are formed in each of the carbon fiber layers 21 to 24 and the reinforcement component 41. The cut-out parts 14 corresponds to parts where the second areas 12 formed of resin material are disposed.

In the example shown in Fig. 9, the reinforcement component 41 is disposed in the center of the plurality of carbon fiber layers 21 to 24 (i.e., between the carbon fiber layers 22 and 23). However, the reinforcement component 41 may be disposed between any two neighboring carbon fiber layers among the carbon fiber layers 21 to 24. That is, the reinforcement component 41 may be disposed between the carbon fiber layers 21 and 22, or may be disposed between the carbon fiber layers 23 and 24. By disposing the reinforcement component 41 among the plurality of carbon fiber layers 21 to 24, it is possible to suppress the plastic deformation of the reinforcement component 41 owing to the restoring force of the carbon fiber layers and thereby to make the housing 40 more rigid and more unyielding. For example, a metal material or a resin material can be used for the reinforcement component 41. Examples of the metal material for the reinforcement component 41 include magnesium alloys, aluminum, aluminum alloys, and stainless steel.

Further, similarly to the first exemplary embodiment, the direction of the carbon fibers of the carbon fiber layer 21 disposed on the outermost side of the housing 40 (in the place furthest from the display section 4) among the plurality of carbon fiber layers 21 to 24 is conformed to the longitudinal direction of the housing. As a result, it is possible to diffuse the heat generated from components housed in the housing 40 in the longitudinal direction d1 of the housing 40. Further, by disposing carbon fibers in an orderly fashion in the longitudinal direction d1 of the housing 40, the strength in the longitudinal direction of the housing 40 can be improved, thus improving the resistance to impacts that would be exerted when the portable terminal device is dropped.

Further, the direction of the carbon fibers of the carbon fiber layer 24 disposed on the innermost side of the housing 40 among the plurality of carbon fiber layers 21 to 24 may be conformed to the longitudinal direction d1 of the housing 40. By conforming the direction of the carbon fibers of the carbon fiber layer 24 disposed on the innermost side of the housing 40 to the longitudinal direction d1 of the housing 40, it is possible to preferentially diffuse the heat generated from components (such as circuit components) housed in the housing 40 in the longitudinal direction d1 of the housing 40 before this generated heat diffuses to the outside of the housing 40 (i.e., to the carbon fiber layer 21 located on the outer side).

Further, the direction of the carbon fiber layers 22 and 23 disposed between the carbon fiber layers 21 and 24 among the plurality of carbon fiber layers 21 to 24 may be conformed to a direction d2 intersecting the longitudinal direction of the housing 40. By conforming the direction of the carbon fiber layers 22 and 23 to the direction d2 intersecting the longitudinal direction of the housing 40 as described above, it is possible to increase the strength in the direction d2 intersecting the longitudinal direction of the housing 40 while maintaining the strength in the longitudinal direction d1 of the housing 40 and the heat dissipating effect of the housing 40.

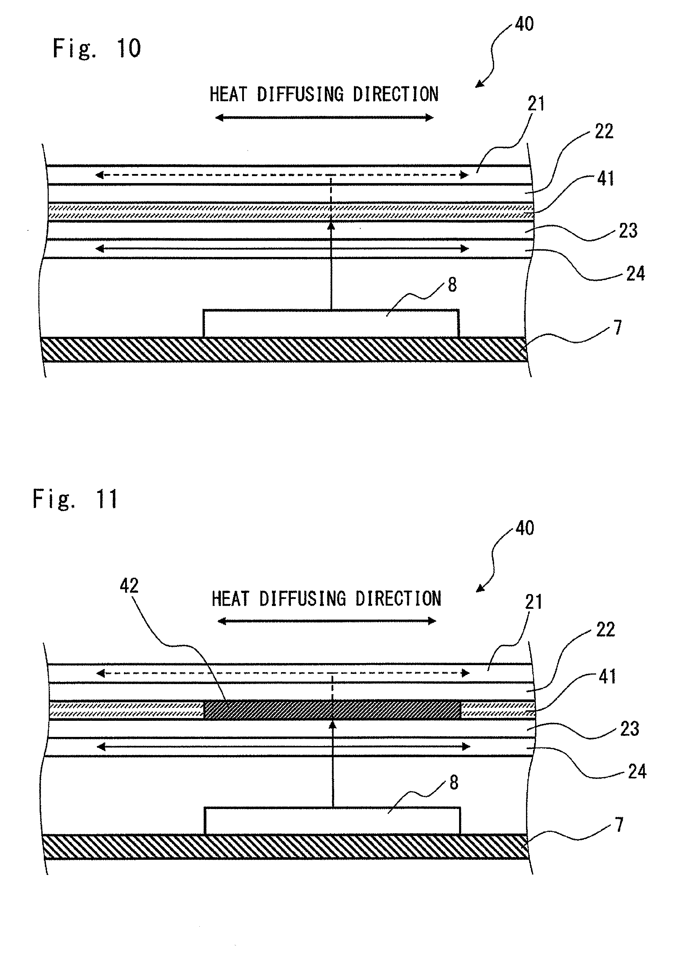

Fig. 10 is a cross section showing an example of a housing 40 provided in the portable terminal device according to this exemplary embodiment. As shown in Fig. 10, the housing 40 is formed by stacking a plurality of carbon fiber layers 21 to 24 and a reinforcement component 41 in the direction perpendicular to the main surface of the housing 40. For example, when a resin material is used for the reinforcement component 41, the heat from the circuit component 8 disposed on the substrate 7 is less likely to be transferred to the carbon fiber layers 21 and 22 disposed on the outer side of the housing 40 since the thermal conductivity of the resin material is low. As a result, the heat from the circuit component 8 is transferred in the longitudinal direction of the housing 40 through the carbon fiber layer 24 (whose carbon fibers are oriented in the longitudinal direction of the housing 40) disposed on the inside with respect to the reinforcement component 41.

By disposing the reinforcement component 41 between the carbon fiber layers as described above, the strength of the housing 40 can be improved. Further, the use of resin material for the reinforcement component 41 can suppress the transfer of the heat generated in the circuit component 8 to the carbon fiber layers 21 and 22 located on the outer side of the housing 40. Therefore, it is possible to make it less likely that a user would feel the heat originating from the inside of the portable terminal device when the user holds the potable terminal device in his/her hand. That is, it is possible to diffuse the heat generated in the circuit component 8 in the longitudinal direction of the housing 40 through the carbon fiber layer 24 disposed on the inside with respect to the reinforcement component 41 before this generated heat diffuses to the outside of the housing 40 (i.e., to the carbon fiber layer 21 located on the outer side).

Fig. 11 is a cross section showing another example of a housing provided in the portable terminal device according to this exemplary embodiment. As shown in Fig. 11, the housing 40 is formed by stacking a plurality of carbon fiber layers 21 to 24 and a reinforcement component 41 in the direction perpendicular to the main surface of the housing 40. In the example shown in Fig. 11, an heat insulating component 42 is provided in a part of the reinforcement component 41. For example, when a metal material is used for the reinforcement component 41, the heat from the circuit component 8 is more likely to be transferred to the carbon fiber layers 21 and 22 disposed on the outer side of the housing 40 since the thermal conductivity of the metal material is high. Therefore, in the example shown in Fig. 11, the heat insulating component 42 is disposed in an area of the reinforcement component 41 where the reinforcement component 41 overlaps the circuit component 8 in the stacking direction of the carbon fiber layers. Therefore, since the heat insulating component 42 is provided in the reinforcement component 41, the heat generated from the circuit component 8 can be diffused in the longitudinal direction of the housing 40 through the carbon fiber layer 24 disposed on the inside with respect to the reinforcement component 41 before this generated heat diffuses to the outside of the housing 40 (i.e., to the carbon fiber layer 21 located on the outer side).

When the heat insulating component 42 is provided in the reinforcement component 41, for example, a part of the reinforcement component 41 may be cut out and the heat insulating component 42 may be buried in this cut-out part. For example, urethane foam or the like can be used for the heat insulating component 42. Further, for example, a resin material may be used for the reinforcement component 41 and a material having a thermal conductivity lower than that of this resin material may be used for the heat insulating component 42.

Meanwhile, when the heat insulating component 42 is provided in the reinforcement component 41, the strength of the part of the reinforcement component 41 where the reinforcement component 41 is provided becomes weaker. The stress exerted at the center in the longitudinal direction of the housing 40 is weaker than that exerted at the ends in the longitudinal direction of the housing 40. Therefore, when the heat insulating component 42 is disposed at or near the center in the longitudinal direction of the housing 40, the strength of the housing 40 can be maintained. In contrast to this, when the heat insulating component 42 is disposed near the end(s) in the longitudinal direction of the housing 40, the stress exerted on the housing 40 becomes stronger, thus making it very difficult to maintain the strength of the housing 40 at a satisfactory level. In such cases, a component having a large heat capacity may be provided in the area of the reinforcement component 41 where the reinforcement component 41 overlaps the circuit component 8 in the stacking direction of the carbon fiber layers (i.e., the area indicated by a symbol "42" in Fig. 11).

For example, a metal material (e.g., aluminum, an aluminum alloy, copper, and so on) can be used as the component having a large heat capacity. By providing a component having a large heat capacity, it is possible to accumulate the heat generated in the circuit component 8 in the component having a large heat capacity and thereby to prevent the heat from the circuit component 8 from diffusing to the outside of the housing 40 (i.e., to the carbon fiber layer 21 located on the outer side). Further, since the component having a large heat capacity has a strength stronger than that of the heat insulating component, the strength of the housing 40 can be maintained even when the component having a large heat capacity is disposed in the longitudinal end(s) of the housing 40.

Although the present invention has been explained above with reference to exemplary embodiments, the present invention is not limited to the above-described exemplary embodiments. Various modifications that can be understood by those skilled in the art can be made to the configuration and details of the present invention within the scope of the invention.

This application is based upon and claims the benefit of priority from Japanese patent applications No. 2012-006587 and No. 2012-128093, filed on January 16, 2012 and June 5, 2012, respectively, the disclosures of which are incorporated herein in their entireties by reference.

### Reference Signs List

- 1: PORTABLE TERMINAL DEVICE
- 2: PANEL
- 3: DISPLAY PANEL
- 4: DISPLAY SECTION
- 5: FRAME COMPONENT
- 6: BATTERY
- 7: SUBSTRATE
- 8: CIRCUIT COMPONENT
- 9_1, 9_2: ANTENNAS
- 10, 40: HOUSINGS
- 11: FIRST AREA
- 12: SECOND AREA
- 13_1, 13_2: PROTRUSIONS
- 14: CUT-OUT PART
- 15, 16: DIFFUSING DIRECTIONS
- 21, 22, 23, 24: CARBON FIBER LAYERS
- 41: REINFORCEMENT COMPONENT
- 42: HEAT INSULATING COMPONENT

## Claims

1. A portable terminal device comprising a housing, wherein
the housing comprises a plurality of stacked carbon fiber layers, and
a direction of carbon fibers of a first carbon fiber layer disposed on an outermost side of the housing among the plurality of carbon fiber layers coincides with a longitudinal direction of the housing.

2. The portable terminal device according to Claim 1, wherein a direction of carbon fibers of a second carbon fiber layer disposed on an innermost side of the housing among the plurality of carbon fiber layers coincides with the longitudinal direction of the housing.

3. The portable terminal device according to Claim 2, wherein a direction of carbon fibers of a carbon fiber layer disposed between the first and second carbon fiber layers among the plurality of carbon fiber layers is a direction intersecting the longitudinal direction of the housing.

4. The portable terminal device according to any one of Claims 1 to 3, wherein
a first component that generates heat and a second component having a large heat capacity are housed in the housing, and
the first and second components are arranged in the longitudinal direction of the housing.

5. The portable terminal device according to Claim 2, wherein
a first component that generates heat and a second component having a large heat capacity are housed in the housing, and
the direction of carbon fibers of the second carbon fiber layer is a direction from the first component toward the second component.

6. The portable terminal device according to Claim 4 or 5, wherein a distance between an inner surface of the housing and the second component is shorter than a distance between the inner surface of the housing and the first component.

7. The portable terminal device according to any one of Claims 4 to 6, wherein a third component for transferring heat from the housing to the second component is provided between an inner surface of the housing and the second component.

8. The portable terminal device according to any one of Claims 1 to 7, wherein of carbon fibers forming the housing, an amount of carbon fibers oriented in the longitudinal direction of the housing is larger than that of carbon fibers oriented in a direction intersecting the longitudinal direction of the housing.

9. The portable terminal device according to any one of Claims 1 to 8, wherein the first component is a circuit component.

10. The portable terminal device according to any one of Claims 1 to 9, wherein the second component is a battery.

11. The portable terminal device according to Claim 10, wherein the second component further comprises a frame component to which a specific component is fixed.

12. The portable terminal device according to any one of Claims 1 to 11, wherein a reinforcement component is provided between the plurality of carbon fiber layers.

13. The portable terminal device according to Claim 12, wherein the reinforcement component is formed of resin material.

14. The portable terminal device according to Claim 12, wherein the reinforcement component is formed of metal material.

15. The portable terminal device according to Claim 13 or 14, wherein the housing comprises an heat insulating component disposed in an area of the reinforcement component where the reinforcement component overlaps the first component in a stacking direction of the carbon fiber layers.

16. The portable terminal device according to Claim 13 or 14, wherein the housing comprises a component having a large heat capacity disposed in an area of the reinforcement component where the reinforcement component overlaps the first component in a stacking direction of the carbon fiber layers.

17. The portable terminal device according to any one of Claims 1 to 16, further comprising an antenna disposed in a longitudinal end of the housing, wherein
the housing comprises an area in a place corresponding to a place where the antenna is disposed, the area being formed by using an insulator as a main material.
